# EUROPÄISCHE PATENTANMELDUNG

(11) **EP 0 849 078 A1**
(43) Veröffentlichungstag der Anmeldung: **24.06.1998**
(21) Anmeldenummer: 97120239.5
(22) Anmeldetag: 19.11.1997
(51) Int. Cl.: B41F 13/012, F16H 55/18

(54) **Vorrichtung zur Vermeidung von Spiel zwischen den kämmenden Zähnen eines ersten und eines zweiten Zahnrads in einem Druckwerk einer offset-Rotationsdruckmaschine**

(30) Priorität: 18.12.1996 US 769055
(71) Anmelder: Heidelberger Druckmaschinen Aktiengesellschaft, D-69115 Heidelberg (DE)
(72) Erfinder: Charles Burke, David, Portsmouth, NH 03801 (US); Edward Breton, Richards, Rochester, NH 03857 (US)

(57) **Zusammenfassung**

Eine Vorrichtung zur Vermeidung von Spiel zwischen einem ersten Zahnrad (2) und einem zweiten Zahnrad (6) eines Getriebezuges in einer Rotationsdruckmaschine umfaßt ein beilaufendes Zahnrad (10), das neben dem ersten Zahnrad (2) drehbar gelagert ist und sich um die gleiche Drehachse (12) wie das erste Zahnrad dreht, wobei die Zähne (18) des beilaufenden Zahnrads (10) mit den Zähnen (20) des zweiten Zahnrads (6) kämmen. Die Vorrichtung umfaßt ferner ein Stützelement (42), das am ersten Zahnrad (2) oder am beilaufenden Zahnrad (10) gebildet ist, sowie eine Blattfederanordnung (24), die sich bezüglich der Drehachse des ersten Zahnrads (2) im wesentlichen radial erstreckt. Die Blattfederanordnung (24) wird aus ihrer Nullposition ausgelenkt und kontaktiert das Stützelement (42) mit ihrem zweiten Endteil (40), wobei das Stützelement (42) mit einer Kraft beaufschlagt wird, die das beilaufende Zahnrad (10) und das erste Zahnrad (2) in der Weise vorspannt, daß sich diese sich in entgegengesetzten Richtungen drehen.

## Beschreibung

Die vorliegende Erfindung betrifft eine Vorrichtung zur Vermeidung von Spiel zwischen den kämmenden Zähnen eines ersten und eines zweiten Zahnrads, z. B. zwischen den ineinandergreifenden Zähnen eines Plattenzylinderzahnrads und eines korrespondierenden Gummituchzylinderzahnrads in einem Druckwerk einer Offset-Rotationsdruckmaschine gemäß dem Oberbegriff von Anspruch 1.

Die Zähne eines ersten Zahnrads, die mit den Zähnen eines korrespondierenden zweiten Zahnrads kämmen, z. B. die Zähne eines antreibenden Zahnrads , die mit den Zähnen eines getriebenen Zahnrads eines Getriebezuges kämmen, neigen gewöhnlich dazu, sich in Umfangsrichtung voneinander zu trennen, wenn sich die Zahnräder mit sehr hohen Geschwindigkeiten drehen. Somit haben die Zähne eines an einem Gummituchzylinder in einem Druckwerk einer Rotationsdruckmaschine fixierten antreibenden Zahnrads die Neigung, sich in Umfangsrichtung von den Zähnen eines an einem angrenzenden Plattenzylinder des Druckwerks fixierten Zahnrads zu trennen, wenn die Zylinder mit sehr hohen Geschwindigkeiten rotieren. Diese umfängliche Trennung der Zähne voneinander ist oft die Ursache von Registerfehlern, die dann ein sogenanntes 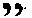 Dublieren" der Rasterpunkte hervorrufen, wodurch die Qualität der Druckproduckte, besonders in einer Offset-Rotationsdruckmaschine erheblich beeinträchtigt wird.

Ein weiteres Problem, das bei einer Trennung der Zähne eines antreibenden Zahnrads und eines korrespondierenden getriebenen Zahnrads in Erscheinung tritt, ist das Schwingen der Zahnräder, was im Falle der oben erwähnten Plattenzylinder- und Gummituchzylinder-Zahnräder eines Druckwerks ebenfalls schädlich für die Druckqualität sein kann.

US 5,357,858 offenbart eine Vorrichtung zur Vermeidung einer peripheren Trennung der kämmenden Zähne eines Gummituchzylinder-Zahnrads und eines Platterzylinder-Zahnrads voneinander. Das erste Zahnrad bewegt sich um eine Achse, und ein koaxial zum ersten Zahnrad angeordnetes zweites Zahnrad bewegt sich um die gleiche Achse relativ zum ersten Zahnrad. Die Zähne eines dritten Zahnrads kämmen mit den Zähnen des zweiten Zahnrads. Ein viertes Zahnrads, das koaxial zum Plattenzylinderzahnrad angeordnet ist, bewegt sich mit diesem, und die Zähne des vierten Zahnrads kämmen mit den Zähnen des dritten Zahnrads. Die Vorrichtung umfaßt ferner eine elastische, vorgespannte Torsionsfeder mit einer herkömmlichen Windung, die das erste und das zweite Zahnrad antriebsmäßig verbindet, und zwar über eine mit dem ersten Zahnrad fest verbundene Welle, die sich durch eine Öffnung im Zentrum des zweiten Zahnrads entlang der Drehachse des ersten und zweiten Zahnrads erstreckt. Dabei werden das erste und das zweite Zahnrad um ihre gemeinsame Drehachse in jeweils entgegengesetzter Richtung vorgespannt. Da das durch die vorgespannte Torsionsfeder auf der Welle ausgeübte Drehmoment eine radiale Kraft erzeugt, die auf die Welle an der Stelle wo das Ende der Torsionsfeder mit der Welle verbunden sind die Stützlager der Welle in hohem Maße beansprucht, was einen erhöhten Verschleiß der Lager und anderer Komponenten zur Folge hat. Bei solch einer Konfiguration können Lagerbrüche auftreten. Aüßerdem ist die Vorrichtung relativ groß und umfaßt eine hohe Anzahl von Einzelteilen, was die Herstellungskosten der Vorrichtung und auch die Gefahr der Fehlfunktionen erhöht.

US 3,407,727 offenbart eine Vorrichtung zur Vermeidung von Spiel zwischen den kämmenden Zähnen eines an einem Plattenzylinder fixierten ersten Zahnrads und eines an einem Gummituchzylinder fixierten zweiten Zahnrads in einer Rotationsdruckmaschine, die ein zusätzliches oder beilaufendes, koaxial zum ersten Zahnrad angebrachtes Zahnrad umfaßt, wobei die Zähne des beilaufenden Zahnrads und des ersten Zahnrads mit den Zähnen des zweiten Zahnrads kämmen. Das beilaufende Zahnrad und das erste Zahnrad werden durch eine Spiralfeder, die in einer in dem beilaufenden Zahnrad geformten Ausnehmung angeordnet ist und mit ihrem ersten Ende an dem beilaufenden Zahnrad und mit ihrem zweiten Ende an einem an der angrenzenden Außenfläche des ersten Zahnrads fest angebrachten Schraubenmechanismus anleigt, vorgespannt, so daß sich die Zahnräder in entgegengesetzten Richtungen drehen. Um die Kraft, welche das beilaufende und das erste Zahnrad in entgegengesetzten Richtungen vorspannt, variieren zu können und dadurch Spiel zwischen den beiden Zahnrädern zu vermeiden, kann die Federkraft der Spiraldruckfeder über den Schraubenmechanismus geändert werden. Aufgrund der großen Ausnehmung in dem beilaufenden Zahnrad, die erforderlich ist, um darin eine Spiralfeder mit einer ausreichend hohen Vorspannkraft unterzubringen, ist das beilaufende Zahnrad in dem Teil, wo sich die Ausnehmung befindet, von verminderter Stabilität. Außerdem ist die maximale Kraft, die von der Spiraldruckfeder erzeugt werden zu gering, d. h. sie reicht nicht aus, um Spiel zwischen den zusammenwirkenden Plattenzylinder- und Gummituchzylinder-Zahnrädern in herkömmlichen Druckmaschinen, die z. B. mit Geschwindigkeiten von 100.000 Umdrehungen pro Stunde betrieben werden, zu vermeiden.

Es ist eine Aufgabe der vorliegenden Erfindung, eine Vorrichtung zur Vermeidung von Spiel zwischen den kämmenden Zähnen zweier Zahnräder, z. B. des Zahnrads eines Gummituchzylinders und des Zahnrads eines korrespondierenden Plattenzylinders in einem Druckwerk einer Offset-Rotationsdruckmaschine zu schaffen, die einfach aufgebaut ist, mit nur wenigen zusätzlichen Elementen auskommt und mit der Spiel zwischen den beiden Zahnrädern auch bei sehr hohen Geschwindigkeiten zuverlässig vermieden wird.

Es ist eine weitere Aufgabe der vorliegenden Erfindung, eine Anti-Spiel-Vorrichtung zu schaffen, die in einfacher Weise ein Variieren der Vorspannkräfte erlaubt, so daß die Vorrichtung an unterschiedliche Zähnräder, die unter unterschiedlichen Bedingungen arbeiten, und an unterschiedliche Druckmaschinentypen angepaßt oder nachgerüstet werden kann.

Die erfindungsgemäße Vorrichtung weist den Vorteil auf, daß auch bei sich ändernden Abständen zwischen den Zentren der Zahnräder (z. B. zwischen den Zentren des Plattenzylinder-Zahnrads und des Gummituchzylinder-Zahnrads) Kräfte erzeugt werden, die bewirken, daß sich die Zahnräder (z. B. ein beilaufendes Zahnrad und ein Plattenzylinder-Zahnrad) in entgegengesetzte Richtungen drehen und dadurch jegliches Spiel oder gar eine Lücke zwischen den Zahnrädern verhindern, was in herkömmlichen Rotationsdruckmaschinen, in welchen die statischen Anti-Spiel-Zahnräder nur auf einen fixen Spielraum zwischen den Zentren der kämmenden Zahnräder und nicht auf Änderungen der Abstände zwischen den Zahnradzentren wirken, nicht der Fall ist.

Nach einem Ausführungsbeispiel der Erfindung umfaßt eine Vorrichtung zur Vermeidung von Spiel zwischen den kämmenden Zähnen eines ersten und eines zweiten Zahnrads, z. B. eines Plattenzylinder-Zahnrads and eines korrespondierenden Gummituchzylinder-Zahnrads in einem Druckwerk einer Offset-Rotationsdruckmaschine, ein zusätzliches oder beilaufendes Zahnrad, das neben dem ersten Zahnrad und auf dessen Drehachse drehbar gelagert ist, wobei die Zähne des beilaufenden Zahnrads mit den Zähnen des zweiten Zahnrads kämmen. Ein Stützelement ist bezuglich mindestens eines des jeweils ersten und beilaufenden Zahnrades fest angebracht. Eine Blattfederanordnung weist einen ersten Endteil auf, der sich bezuglich der Drehachse des ersten Zahnrads im wesentlichen radial erstreckt, wobei ein zweiter Endteil der Blattfederanordnung aus der Nullposition bewegt und mit dem Stützelement in Kontakt gebracht wird, um das Stützelement mit einer Kraft zu beaufschlagen, die das beilaufende und das erste Zahnrad vorspannt, sodaß sich diese in entgegengesetzten Richtungen drehen.

Nach einem anderen Ausführungsbeispiel ist das Stützelement durch einen Stift oder Bolzen gebildet, der aus dem ersten Zahnrad oder aus dem beilaufenden Zahnrad seitlich vorspringt. Die Blattfederanordnung ist z. B. außerhalb des beilaufenden Zahnrads angeordnet. Nach einem weiteren Ausführungsbeispiel der Erfindung erstreckt sich das zweite Ende der Blattfederanordnung in einer Ausnehmung, die im ersten Zahnrad oder im beilaufenden Zahnrad geformt sein kann, wobei das Stützelement an der Seitenwand der Ausnehmung gebildet ist.

Das erste Zahnrad umfaßt z. B. einen hülsenförmigen koaxialen Vorsprung, der sich durch eine in dem beilaufenden Zahnrad gebildete zentrale Ausnehmung erstreckt, wobei der Innendurchmesser dieser zentralen Ausnehmung und der Außendurchmesser des hülsenförmigen koaxialen Vorsprungs derart ausgebildet sind, daß das beilaufende Zahnrad auf dem hülsenförmigen koaxialen Vorsprung drehbar gelagert und bezüglich der Drehachse des ersten Zahnrads radial unbewegbar ist.

Außerdem kann in einem Ausführungsbeispiel der Erfindung eine sich radial erstreckende Ausnehmung in mindestens einem des jeweils beilaufenden Zahnrads und hülsenförmigen koaxialen Vorsprungs des ersten Zahnrads geformt sein, um den ersten Endteil der Blattfederanordnung darin aufzunehmen.

Ferner kann die Blattfederanordnung in der sich radial erstreckenden Ausnehmung mittels eines sich durch jeweilige Öffnungen erstreckenden Stiftes oder Bolzens radial gesichert werden. Beispielsweise können die Öffnungen in dem hülsenförmigen koaxialen Vorsprung und in dem ersten Endteil der Blattfederanordnung geformt sein.

Nach einem weiteren Ausführungsbeispiel der Erfindung ist die Blattfederanordnung in der sich radial erstreckenden Ausnehmung durch einen Bügel axial gesichert.

Gemäß einem weiteren Ausführungsbeispiel ist der hülsenförmige Vorsprung mittels Bolzen an dem ersten Zahnrad angebracht.

Ein weiteres Ausführungsbeispiel sieht einen weiteren Stift an dem ersten Zahnrad vor, der sich von der Seitenwand des ersten Zahnrads in eine in dem beilaufenden Zahnrad geformte weitere Ausnehmung erstreckt, um einen Freilauf des beilaufenden Zahnrads zu verhindern, wenn das beilaufende Zahnrad und das zweite Zahnrad außer Eingriff geraten. In dieser Ausführung kann die weitere Ausnehmung des beilaufenden Zahnrads eine elliptische Form haben, und die Blattfederanordnung kann zwei oder mehrere einzelne Blattfedern umfassen, die zusammen an dem ersten Endteil befestigt sind.

Die Vorteile und Merkmale der vorliegenden Erfindung werden in der folgenden Beschreibung bevorzugter Ausführungsbeispiele im Zusammenhang mit den beigefügten, nachstehend erklärten Zeichnungen näher erläutert.

Es zeigen:
- Fig. 1: eine schematische Querschnittsansicht eines Getriebezuges mit Plattenzylinder- und Gummituchzylinder-Zahnrädern in einer Offset-Rotationsdruckmaschine, in welcher die antreibenden Zahnräder zweier Plattenzylinder eine Anti-Spiel-Vorrichtung gemäß vorliegender Erfindung umfassen;
- Fig. 2: einen vergrößerten Querschnitt einer Anti-Spiel-Vorrichtung, die z. B. in dem Getriebezug der Fig. 1 verwendet wird;
- Fig. 3A und 3B: eine schematische Draufsicht der Anti-Spiel-Vorrichtung der Fig. 2;
- Fig. 4: eine vergrößerte schematische Draufsicht eines beilaufenden Zahnrads und einer Blattfederanordnung, die auf ein an dem beilaufenden Zahnrad gebildeten Stützelement gemäß einem Ausführungsbeispiel der vorliegenden Erfindung wirkt; und
- Fig. 5: eine Darstellung eines weiteren Ausführungsbeispiel einer Anti-Spiel-Vorrichtung gemäß vorliegender Erfindung, worin die Blattfederanordnung in einer in dem beilaufenden Zahnrad geformten Ausnehmung angeordnet ist.

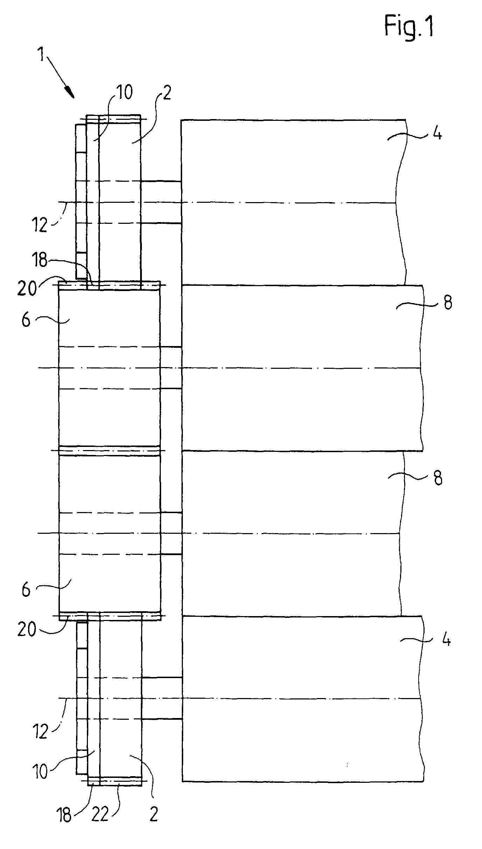

Fig. 1 zeigt eine Vorrichtung 1 zur Vermeidung von Spiel zwischen den kämmenden Zähnen eines ersten und eines zweiten Zahnrads, z. B. des antreibenden Zahnrads 2 eines Plattenzylinders 4 und des antreibenden Zahnrads 6 eines zugeordneten, angrenzenden Gummituchzylinders 8 eines Druckwerks. Die Vorrichtung der Fig. 1 umfaßt ein zusätzliches oder beilaufendes Zahnrad 10, das neben dem ersten Zahnrad 2 gelagert ist.

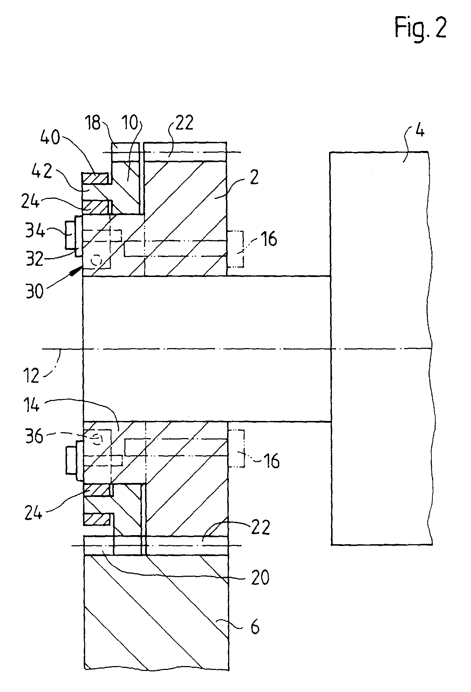

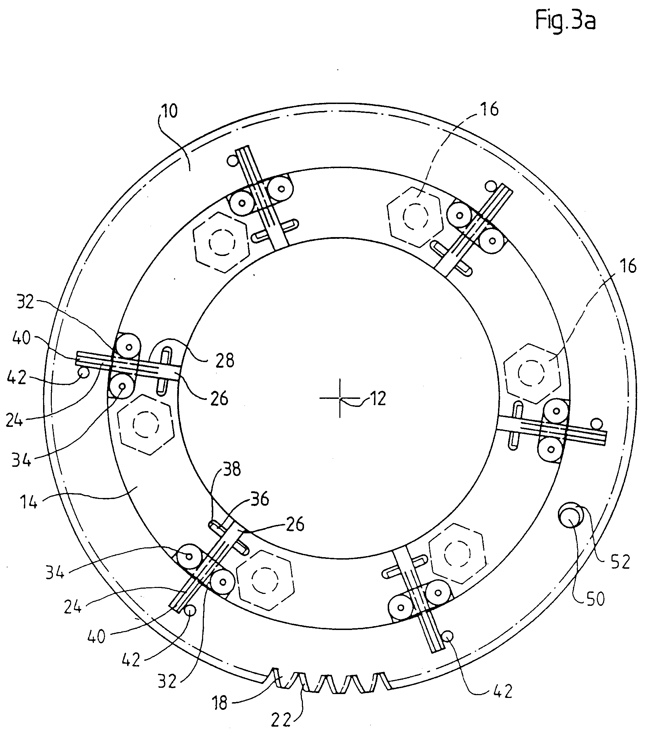

Wie in den Fig. 2 und 3A im Detail gezeigt ist, ist das beilaufende Zahnrad 10 um die gleiche Drehachse 12 wie das erste Zahnrad 2 drehbar. In einem Ausführungsbeispiel ist das zusätzliche Zahnrad 10 aufeinem hülsenförmigen koaxialen Vorsprung 14 gelagert, der beispielsweise als ein integraler Teil des Körpers des ersten Zahnrads 2 ausgebildet oder an dem Körpers des ersten Zahnrads 2 z. B. mittels Bolzen oder Schrauben 16 befestigt sein kann.

Das beilaufende Zahnrad 10 ist vorzugsweise ringförmig ausgebildet, wobei die darin geformte zentrale Ausnehmung einen Innendurchmesser aufweist, der geringfügig größer als der Außendurchmesser des hülsenförmigen Vorsprungs 14 ist. Somit ist das zusätzliche Zahnrad 10 einerseits auf dem hülsenförmigen Vorsprung 14 drehbar gelagert, andererseits jedoch bezüglich der Drehachse 12 des ersten Zahnrads 2 radial unbeweglich.

In einer alternativen Ausführung kann das beilaufende Zahnrad 10 anstatt in der oben beschrieben Weise auch auf Rollen (z. B. drei oder mehreren Rollen), Stiften oder vorspringenden Teilen, die anstelle des hülsenförmigen Vorsprungs 14 an dem Körper des ersten Zahnrads 2 angebracht sind, derart drehbar gelagert sein, daß es radial nicht bewegbar ist, aber bezüglich des ersten Zahnrads 2 koaxial drehbar gelagert ist.

Wie in den Fig. 1, 2 und 3 ersichtlich ist, weist das beilaufende Zahnrad 10 Zähne 18 auf, die mit den Zähnen 20 des zweiten Zahnrads 6 kämmen. Das beilaufende Zahnrad 10 und das erste Zahnrad 2 sind also parallel zueinander derart gelagert, daß sowohl die Zähne 18 des beilaufenden Zahnrads 10 als auch die Zähne 22 des ersten Zahnrads 2 mit den Zähnen 20 des zweiten Zahnrads 6 kämmen.

Eine Blattfederanordnung 24 ist mit einem ersten Endteil 26 antriebsmäßig mit dem hülsenförmigen Vorsprung 14 verbunden. Wie in den Fig. 2, 3A und 4 gezeigt ist, ist das erste Endteil 26 in einer sich im wesentlichen radial erstreckenden Ausnehmung 28 in dem Körper des hülsenförmigen Vorsprungs 14 aufgenommen. In dieser Ausführung der Erfindung kann der hülsenförmige Vorsprung 14 axial neben dem beilaufenden Zahnrad 10 angeordnet sein, d. h. daß die Position, wo die Ausnehmung 28 in dem hülsenförmigen Vorsprung 14 geformt ist, in einem Teil dieses Vorsprungs 14 liegen kann, der sich axial neben dem Teil desselben befindet, auf dem das beilaufende Zahnrad 10 drehbar gelagert ist.

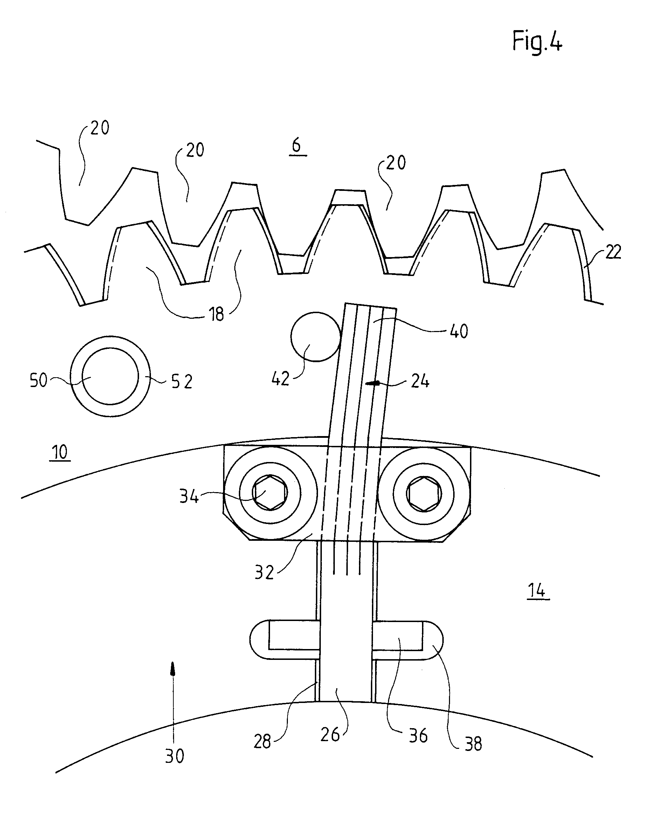

Für eine einfache Montage der Blattfederanordnung 24 kann die Ausnehmung 28 im hülsenförmigen Vorsprung 14 in Richtung zu der in Fig. 2 dargestellten Endfläche 30 des hülsenförmigen Vorsprungs 14 hin offen sein, wobei die Blattfederanordnung 24 z. B. mittels eines Bügels 32, der mit jeweiligen Schrauben oder Bolzen 34 über der Ausnehmung 28 befestigt wird, axial gesichert werden wie dies in den Fig. 2 - 4 gezeigt ist. Ferner kann die Blattfederanordnung 24 in der radialen Ausnehmung 28 z. B. mittels eines sich durch eine jeweilige Öffnung im ersten Endteil 26 der Blattfederanordnung 24 erstreckenden Stifts oder Bolzens 36 radial fixiert werden. Wie in den Figuren 3A und 4 ersichtlich ist, kann der Stift oder Bolzen 36 auch in einer Ausnehmung 38 aufgenommen sein, die sich z. B. in Richtung der Endfläche 30 des hülsenförmigen Vorsprungs 14 öffnet. Somit kann die Blattfederanordnung 24 zusammen mit dem Stift oder Bolzen 36 durch Anbringen oder Entfernen des Bügels 32 mittels der Bolzen 34 mühelos befestigt und wieder gelöst werden. Demgemäß kann die Blattfederanordnung 24 leicht durch eine ersetzt werden, die andere Merkmale aufweist, z. B. eine Blattfeder mit einer anderen Steifigkeit oder Federcharakteristik. Somit kann die Vorrichtung an unterschiedliche Maschinentypen oder Arbeitsbedingungen leicht angepaßt werden.

In einem weiteren Ausführungsbeispiel der Erfindung kontaktiert ein zweiter Endteil 40 der Blattfederanordnung 24 ein an dem beilaufenden Zahnrad 10 ausgebildetes Stützelement 42. Wie in Fig. 4 im Detail gezeigt ist, kann das Stützelement 42 z. B. ein von dem beilaufenden Zahnrad 10 seitlich abstehender Stift oder Bolzen sein. Hier weist das Stützelement 42 eine Länge auf, die ungefähr der Tiefe der Blattfederanordnung 24 (siehe Fig. 2) entspricht.

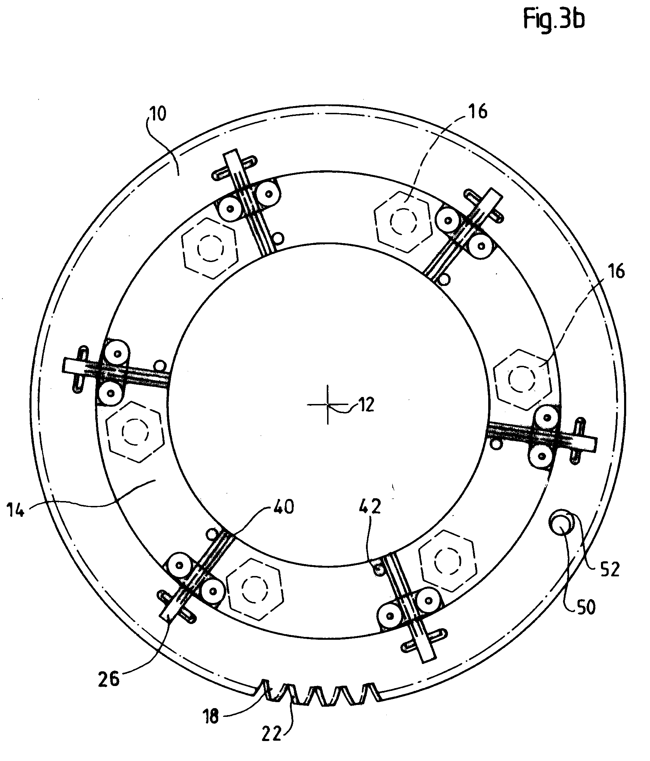

Obschon die Blattfederanordnung 24 zur Antriebsverbindung als an dem ersten Zahnrad 2 befestigt gezeigt ist, ist die Erfindung nicht auf solch eine Ausführung beschränkt ist. Beispielsweise kann der erste Endteil 26 der Blattfederanordnung an dem beilaufenden Zahnrad 10 in ähnlicher Weise angebracht (z. B. fixiert) sein, wie dies zuvor mit Bezug auf das Befestigen des ersten Endteils (26) an dem hülsenförmigen Vorsprung (14) beschrieben ist. Ein Montagebeispiel ist in Fig. 3B dargestellt, worin ähnliche Elemente wie die der Fig. 3A gezeigt sind. In Fig. 3B ist das Stützelement 42 am hülsenförmigen Vorsprung 14 befestigt. Ferner sind in der Ausführung der Fig. 3B die relativen Breiten des beilaufenden Zahnrads 10 und des hülsenförmigen Vorsprungs 14 modifiziert. Das heißt, daß die Breite des beilaufenden Zahnrads 10 sich in axialer Richtung gesehen über den hülsenförmigen Vorsprung 14 hinaus erstreckt, so daß der zweite Endteil 40 der Blattfederanordnung außerhalb der Außenfläche des hülsenförmigen Vorsprungs 14 oder in einer Ausnehmung desselben positioniert ist.

Wie in Fig. 4 ersichtlich kann der zweite Endteil 40 der Blattfederanordnung 24 aus seiner radialen Nullposition (d. h. aus einer in Fig. 4 gezeigten Senkrechtposition) um einen Abstand von beispielsweise ca. 0.1 bis 2.5 mm ausgelenkt werden, wenn die Vorrichtung zusammengebaut ist, wobei auf das Stützelement 42 eine Kraft ausgeübt wird, die dem beilaufenden Zahnrad 10 und dem ersten Zahnrad 2 eine Vorspannung verleiht, so daß diese sich in entgegengesetzten Richtungen zueinander drehen. Anders ausgedrückt werden nach dem Zusammenbau der Vorrichtung 1 durch die von der ausgelenkten oder abgebogenen Blattfederanordnung 24 ausgeübte Vorspannkraft die Zähne 18 des beilaufenden Zahnrads 10 gegen die eine Seite der Zähne 20 des zweiten Zahnrads 6 gepreßt und zur gleichen Zeit werden die Zähne 22 des ersten Zahnrads 2 gegen die andere Seite der Zähne 20 des zweiten Zahnrads 6 gepreßt, wodurch das Spiel zwischen dem ersten Zahnrad 2 und dem zweiten Zahnrad 6 beseitigt wird. Selbst wenn sich bei der erfindungsgemäßen Vorrichtung der Abstand zwischen den Zahnradzentren (z. B. der Abstand zwischen der Drehachse des ersten Zahnrads 2 und der Drehachxse des zweiten Zahnrads 6 in Fig. 1) ändert, wirkt die erzeugte Vorspannkraft, durch die sich das erste Zahnrad 2 und das beilaufende Zahnrad 10 in entgegengesetzten Richtungen drehen, auch dahingehend, daß jegliches durch die variierenden Abstände zwischen den Zahnradzentren hervorgerufenes Spiel oder Zwischenräume beseitigt werden. Somit vermindert oder verhindert die erfindungsgemäße Vorrichtung auch Spiel oder Zwischenräume, die durch Abstandsveränderungen zwischen den Zahnradzentren verursacht werden.

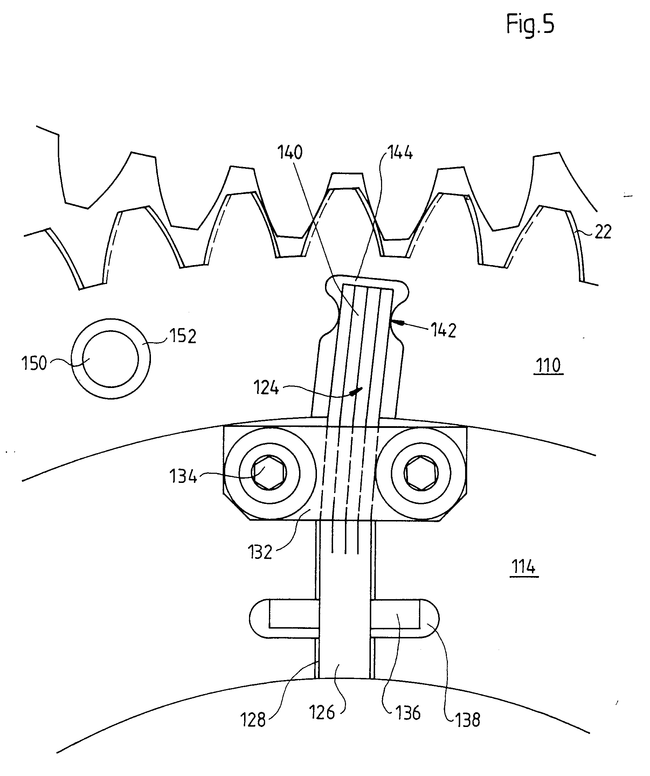

In einem weiteren in Fig. 5 gezeigten Ausführungsbeispiel der Erfindung ist ein zweiter Endteil 140 einer Blattfederanordnung 124 in einer direkt in einem beilaufenden Zahnrad 110 geformten Ausnehmung 144 positioniert, so daß dieser sich in Kontakt mit einem in dem beilaufenden Zahnrad 110 gebildeten Stützelement 142 befindet. Die in Fig. 5 gezeigten Elemente, welche zu den Elementen der Fig. 1 - 4 äquivalent sind, werden mit den gleichen, um 100 erhöhten Bezugsziffern bezeichnet. In der Ausführung der Fig. 5 ist ein erster Endteil 126 der Blattfederanordnung 124 auch in einer Ausnehmung 128 positioniert, die in dem Körper eines an dem ersten Zahnrad 2 angebrachten hülsenförmigen Vorsprungs 114 geformt ist.

In der Ausführung der Fig. 5 ist die Ausnehmung 128 nicht axial neben dem beilaufenden Zahnrad 110, sondern unmittelbar unterhalb des Körpers des beilaufenden Zahnrads 110 angeordnet. In der gleichen Weise wie oben beschrieben kann die Blattfederanordnung 124 dieser Ausführung z. B. durch einen Bolzen oder Stift 136, der sich durch den ersten Endteil 126 der Blattfederanordnung 124 erstreckt und in einer Ausnehmung 138 in dem Körper des hülsenförmigen Vorsprungs 114 angeordnet ist, radial gesichert werden. Die Ausnehmung 138 zur Aufnahme des Bolzens 136 und die Ausnehmung 128 zur Aufnahme des ersten Endteils 126 der Blattfederanordnung 124 sind ebenfalls vorzugsweise in Richtung der Endfläche des hülsenförmigen Vorsprungs 114 offen. Ferner kann die Blattfederanordnung 124 mittels eines Bügels 132 und jeweiliger Bolzen oder Schrauben 134 in der Ausnehmung 128 axial gesichert werden, wie dies im Zusammenhang mit den Fig. 1 - 4 beschrieben ist, so daß die Blattfederanordnung 124 zusammen mit dem Bolzen 136 für die radiale Sicherung der Blattfederanordnung 124 mühelos an- und abmontiert werden kann.

Um das beilaufende Zahnrad 10 der Fig. 1 - 4 und das beilaufende Zahnrad 110 der Fig. 5 an einer ungehinderten Drehung zu hindern, die durch die federelastischen Kräfte verursacht wird, die bei der Biegung der Blattfederanordnung 24, 124 ausgeübt werden, und die zur Trennung des ersten Zahnrades 2 von dem beilaufenden Zahnrad 10, 110 führen können (z. B. im Falle eines Bahnbruchs in einer Rollenrotationsdruckmaschine, wenn sich die gerissene Papierbahn um den Gummituchzylinder windet und dabei den Gummituchzylinder vom Plattenzylinder trennt), kann ein weiterer Stift 50 gemäß den Fig. 3A und 4 oder ein Stift 150 gemäß Fig. 5 an dem ersten Zahnrad 2 vorgesehen sein, der sich von der Seitenwand des ersten Zahnrads 2 in eine jeweilige weitere in dem jeweiligen beilaufenden Zahnrad 10, 110 geformte Ausnehmung 52, 152 erstreckt. Die Ausnehmung 52, 152 kann z. B. von kreisrunder oder elliptischer Form sein.

Obschon die Erfindung mit Bezug auf eine Blattfederanordnung beschrieben wurde, kann eine beliebige Anzahl von Blattfederanordnungen verwendet werden. Beispielsweise können zwei, drei, vier oder eine größere Anzahl von Blattfederanordnungen 24, 124 vorgesehen sein. In Ausführungen mit einer geraden Zahl von Blattfederanordnungen können die Blattfederanordnungen um das Zentrum des hülsenförmigen Vorsprungs 14 (d. h. ein mit der Drehachse 12 des ersten Zahnrads 2 korrespondierendes Zentrum) in radial einander gegenüberliegenden Paaren angeordnet sein. Solch eine Anordnung vermindert oder verhindert verschleißfördernde zusammengesetzte Drehmomente, die entstehen, weil jede der Blattfederanordnungen allein dazu neigt, das beilaufende Zahnrad 10, 110 um Achsen zu drehen, die senkrecht zur Drehachse des ersten Zahnrads verlaufen. Das heißt, daß bei einer Plazierung der Blattfederanordnungen in radial einander gegenüberliegenden Paaren alle hinsichtlich einer senkrecht zur Drehachse des ersten Zahnrads 2 verlaufenden Achse wirkenden Drehmomente kompensiert werden.

In dem Ausführungsbeispiel der Fig. 3A sind sechs Blattfederanordnungen gezeigt, welche um den hülsenförmigen Vorsprung 14, 114 in gleichmäßiger umfänglicher Beabstandung voneinander plaziert sind. Hierbei können die Vorspannkräfte für das Drehen des beilaufenden Zahnrads 10, 110 bezuglich des ersten Zahnrads 2 leicht reduziert oder multipliziert werden, und die Größe der Vorspannkraft kann leicht an die unterschiedlichen Maschinentypen und/oder Arbeitsbedingungen angepaßt werden. Beispielsweise kann die Anpassung der Vorspannkräfte einfach dadurch erzielt werden, daß auf eine, zwei oder mehrere Blattfederanordnungen 24, 124 verzichtet wird. Ferner können die Vorspannkräfte durch Variieren (d. h. Erhöhen oder Vermindern) der Anzahl der Blattfedern einer jeden Blatttfederanordnung (z. B. von vier Blattfedern für jede der in Fig. 3A gezeigten sechs Anordnungen auf sechs, sieben oder jegliche Anzahl von Blattfedern) geändert werden.

### LISTE DER BEZUGSZEICHEN

- 1: Vorrichtung
- 2: erstes oder antreibendes Zahnrad des Plattenzylinders 4
- 4: Plattenzylinder
- 6: zweites oder antreibendes Zahnrad des Gummituchzylinders 8
- 8: Gummituchzylinder
- 10: zusätzliches oder beilaufendes Zahnrad
- 12: Drehachse
- 14: hülsenförmiger Vorsprung
- 16: Bolzen oder Schrauben
- 18: Zähne des beilaufenden Zahnrads 10
- 20: Zähne des zweiten Zahnrads 6
- 22: Zähne des ersten Zahnrads 2
- 24: Blattfederanordnung
- 26: erster Endteil der Anordnung 24
- 28: Ausnehmung im Vorsprung 14
- 30: Endfläche des Vorsprungs 14
- 32: Bügel
- 34: Schrauben und Bolzen
- 36: Stift oder Bolzen
- 38: Ausnehmung
- 40: zweiter Endteil der Blattfederanordnung 24
- 42: Stützelement
- 50: Stift
- 52: Ausnehmung
- 110: beilaufendes Zahnrad
- 114: hülsenförmiger Vorsprung des ersten Zahnrads 2
- 124: Blattfederanordnung (Fig. 5)
- 126: erster Endteil der Blattfederanordnung 124 (Fig. 5)
- 128: Ausnehmung des Vorsprungs 114 (Fig. 5)
- 132: Bügel
- 134: Bolzen
- 136: Bolzen oder Stift
- 138: Ausnehmung im Vorsprung 114
- 140: zweiter Endteil der Blattfederanordnung 124 (Fig. 5)
- 142: Stützelement
- 144: Ausnehmung des Zahnrads 110
- 150: Stift
- 152: Ausnehmung

## Patentansprüche

1. Vorrichtung zur Vermeidung von Spiel zwischen den kämmenden Zähnen eines ersten Zahnrads (2) und eines zweiten Zahnrads (6) in einer Rotationsdruckmaschine, welche die folgenden Merkmale umfaßt:
ein neben dem ersten Zahnrad (2) gelagertes und sich um die Drehachse (12) des ersten Zahnrads (2) drehendes beilaufendes Zahnrad (10, 110), dessen Zähne (18) mit den Zähnen (20) des zweiten Zahnrads (6) kämmen,
ein am ersten Zahnrad (2) oder am beilaufenden Zahnrad (10, 110) gebildetes Stützelement (42, 142), sowie
eine Blattfederanordnung (24, 124) mit einem sich bezüglich der Drehachse (12) des ersten Zahnrads (2) im wesentlichen radial erstreckenden ersten Endteil (26, 126) sowie mit einem zweiten, aus seiner Null-Position ausgelenkten Endteil (40, 140), der sich mit dem Stützelement (42, 142) in Eingriffbefindet und auf das Stützelement (42, 142) eine federelastische Kraft ausübt, welche das beilaufende Zahnrad (10, 110) und das erste Zahnrad (2) in der Weise vorspannt, daß sich diese in entgegengesetzte Richtungen drehen.

2. Vorrichtung nach Anspruch 1,
**dadurch gekennzeichnet,**
daß das Stützelement (42) einen Stift umfaßt, der von dem beilaufenden Zahnrad (10) absteht, und daß die Blattfederanordnung (24) außerhalb des beilaufenden Zahnrads (10) angeordnet ist.

3. Vorrichtung nach Anspruch 1,
**dadurch gekennzeichnet,**
daß im beilaufenden Zahnrad (110) ferner eine Ausnehmung (144) gebildet ist, in die sich der zweite Endteil (140) der Blattfederanordnung (124) hinein erstreckt, und daß das Stützelement (142) an einer Seitenwand der Ausnehmung (144) gebildet ist.

4. Vorrichtung nach einem der vorhergehenden Ansprüche,
**dadurch gekennzeichnet,**
daß das beilaufende Zahnrad (10, 110) ferner eine zentrale Ausnehmung zur Aufnahme eines koaxialen hülsenförmigen Vorsprungs (14, 114) des ersten Zahnrads (2) umfaßt, wobei der Innendurchmesser der zentralen Ausnehmung und der Außendurchmesser des koaxialen hülsenförmigen Vorsprungs (14, 114) derart gewählt sind, daß das beilaufende Zahnrad (10, 110) auf dem koaxialen hülsenförmigen Vorsprung (14, 114) drehbar gelagert und bezüglich der Drehachse des ersten Zahnrads (2) radial unbewegbar ist.

5. Vorrichtung nach Anspruch 4,
**dadurch gekennzeichnet,**
daß der erste Endteil (26, 126) der Blattfederanordnung (24, 124) derart gestaltet ist, daß dieser in einer in dem koaxialen hülsenförmigen Vorsprung (14, 114) geformten, sich radial erstreckenden Ausnehmung (28, 128) aufgenommen werden kann.

6. Vorrichtung nach Anspruch 5,
**dadurch gekennzeichnet,**
daß der erste Endteil (26, 126) der Blattfederanordnung (24, 124) eine Öffnung aufweist, derart, daß die Blattfederanordnung (24, 124) in der sich radial erstreckenden Ausnehmung (28, 128) durch einen Stift (36, 136), der sich durch eine andere in dem koaxialen hülsenförmigen Vorsprung (14, 114) geformte Ausnehmung (38, 138) und durch die in dem ersten Endteil (26, 126) der Blattfederanordnung (24, 124) geformte Öffnung erstreckt, radial gesichert ist.

7. Vorrichtung nach Anspruch 5,
**dadurch gekennzeichnet,**
daß ferner ein Bügel (32, 132) vorgesehen ist, durch den die Blattfederanordnung (24, 124) in der sich radial erstreckenden Ausnehmung (28, 128) axial gesichert wird.

8. Vorrichtung nach einem der vorhergehenden Ansprüche,
**dadurch gekennzeichnet,**
daß der koaxiale hülsenförmige Vorsprung (14, 114) mittels Bolzen (34) am ersten Zahnrad (2) befestigt ist.

9. Vorrichtung nach Anspruch 1,
**dadurch gekennzeichnet,**
daß ferner ein Stift (50, 150) vorgesehen ist, der sich von einer Seitenwand des ersten Zahnrads (2) in eine in dem beilaufenden Zahnrad (10, 110) gebildete Ausnehmung (52, 152) erstreckt, um eine ungehinderte Drehung des beilaufenden Zahnrads (10, 110) zu verhindern, wenn das zweite Zahnrad (6) mit dem ersten Zahnrad (2) oder dem beilaufenden Zahnrad (10, 110) außer Eingriff ist.

10. Vorrichtung nach Anspruch 9,
**dadurch gekennzeichnet,**
daß die Ausnehmung (52, 152) des beilaufenden Zahnrads eine elliptische Form aufweist.

11. Vorrichtung nach Anspruch 1,
**dadurch gekennzeichnet,**
daß die Blattfederanordnung (24, 124) mindestens zwei einzelne Blattfedern umfaßt.

12. Vorrichtung nach einem der vorhergehenden Ansprüche,
**dadurch gekennzeichnet,**
daß diese eine Vielzahl von Blattfederanordnungen (24, 124) umfaßt.

13. Vorrichtung nach einem der vorhergehenden Ansprüche,
**dadurch gekennzeichnet,**
daß diese eine geradzahlige Anzahl von Blattfederanordnungen (24, 124) umfaßt, die in radial einander gegenüberliegenden Paaren um die Drehachse (12) angeordnet sind.

14. Rotationsdruckmaschine,
**gekennzeichnet**
durch eine Vorrichtung nach einem der vorhergehenden Ansprüche.
